# EUROPÄISCHE PATENTANMELDUNG

(11) **EP 1 930 377 A2**
(43) Veröffentlichungstag der Anmeldung: **11.06.2008**
(21) Anmeldenummer: 07122286.3
(22) Anmeldetag: 04.12.2007
(51) Int. Cl.: C09B 1/32, C09B 1/28, C09B 1/514, C08K 5/00

(54) **Verfahren zur Herstellung von substituierten Aminoanthrachinonen**

(30) Priorität: 07.12.2006 DE 102006057652
(71) Anmelder: LANXESS Deutschland GmbH, 51369 Leverkusen (DE)
(72) Erfinder: Berneth, Horst, 51373 Leverkusen (DE)

(57) **Zusammenfassung**

Verfahren zur Herstellung von substituierten Aminoanthrachinonen durch Umsetzung von 1,4-Dihydroxyanthrachinon mit Aminen in Gegenwart von Dihydro-1,4-dihydroxyanthrachinon und Borsäureester.

## Beschreibung

Die Erfindung betrifft ein Verfahren zur Herstellung von substituierten Aminoanthrachinonen durch Umsetzung von 1,4-Dihydroxyanthrachinon mit Aminen in Gegenwart von Dihydro-1,4-dihydroxyanthrachinon und Borsäureester.

Substituierte Aminoanthrachinone wie N-substituierte 1-Amino-4-hydroxy- und N,N'-disubstituierte 1,4-Diaminoanthrachinone und ihre Herstellung sind bekannt bspw. aus EP-A-751118 unter Verwendung von Hydroxycarbonsäure, EP-A-1288192 unter Verwendung von NMP als Lösungsmittel oder EP-A-1364993, in der dipolar aprotische Lösungmittel eingesetzt werden. Sie sind beispielsweise als Farbstoffe für Kunststoffe und Synthesefasern als auch als Vorprodukte zur Herstellung von Wollfarbstoffen in Verwendung. Bislang wurden sie hergestellt, indem man 1,4-Dihydroxyanthrachinon (Chinizarin) im Gemisch mit 2,3-Dihydro-1,4-dihydroxyanthrachinon (Leukochinizarin) mit Aminen umsetzt, wobei die Reaktion gegebenenfalls in Gegenwart von Kondensationshilfsmitteln durchgeführt wurde. Beispiele solcher Kondensationshilfsmittel sind Salzsäure (DE-A 2 342 469), Eisessig (US-A 4 083 683) oder Hydroxycarbonsäuren (EP-A-751118). Borsäure wird dabei häufig als Katalysator eingesetzt (DE-P 631 518, Zh. Obshch. Khim. **25** (1955) 617 (engl. Transl. S. 589)). Doch selbst mit diesen Hilfsmitteln sind Reaktionszeit und Ausbeute nicht optimal. Eine Verzögerung der Reaktionszeiten ergibt sich insbesondere durch Schaumbildung. Ebenfalls bilden sich Nebenprodukte, von denen einige im Reaktionsmedium unlöslich sind, sich deshalb im isolierten Hauptprodukt wieder finden und bei der Anwendung Probleme bereiten. Andere Nebenprodukte beeinflussen die Nuance negativ und führen so zu stumpfen Färbungen.

Aus Zh. Organich. Khim. 22 (1986) 611 (engl. Transl. S. 547) sind Komplexe von Hydroxy- und Aminoanthrachinonen mit Bortrifluorid und Bortriacetat bekannt geworden. Sie sind geeignet zur oxidativen Einführung von Aminogruppen in vorher unsubstituierte Positionen am Anthrachinon.

Es wurde nun überraschenderweise ein Verfahren zur Herstellung von substituierten Aminoanthrachinonen gefunden, das durch Umsetzung von 1,4-Dihydroxyanthrachinon mit Aminen in Gegenwart von Dihydro-1,4-dihydroxyanthrachinon und Borsäureester gekennzeichnet ist.

Das erfindungsgemäße Verfahren eignet sich vorzugsweise zur Herstellung von N-substituierten 1-Amino-4-hydroxy-anthrachinonen und N,N'-disubstituierten 1,4-Diaminoanthrachinonen.

N-substituierte 1-Amino-4-hydroxy-anthrachinone sind vorzugsweise solche der Formel (II) 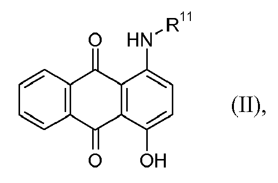 worin
- R¹¹: für C₁-C₁₂-Alkyl, das durch C₁-C₁₈-Alkoxy, Halogen oder Cyano substituiert sein kann, Cyclopentyl, Cyclohexyl oder einen Rest der Formel (IV) 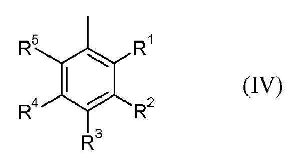
steht,
worin
- R¹ bis R⁵: unabhängig voneinander für Wasserstoff, C₁-C₁₂-Alkyl, Halogen, C₁-C₄-Alkoxy, C₆-C₁₀-Aryloxy oder C₁-C₄-Alkanoylamino stehen und
- R²: zusätzlich auch für SO₂NH-R⁶ stehen kann, wobei R⁶ für gegebenenfalls substituiertes C₆-C₁₀-Aryl oder C₁-C₄-Alkyl steht und als mögliche Substituenten C₁-C₄-Alkyl, Hydroxy, Halogen, C₁-C₄-Alkoxy oder C₆-C₁₀-Aryloxy in Frage kommen.

N,N'-disubstituierte 1,4-Diaminoanthrachinone sind vorzugsweise solche der Formel (III) 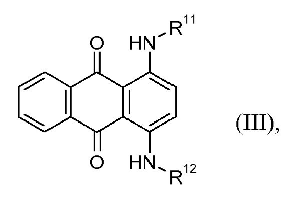 worin
- R¹¹ und R¹²: unabhängig voneinander für C₁-C₁₂-Alkyl, das durch C₁-C₁₈-Alkoxy, Halogen oder Cyano substituiert sein kann, Cyclopentyl, Cyclohexyl oder einen Rest der Formel (IV) 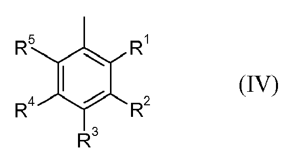
stehen,
worin
- R¹ bis R⁵: unabhängig voneinander für Wasserstoff, C₁-C₁₂-Alkyl, Halogen, C₁-C₄-Alkoxy, C₆-C₁₀-Aryloxy oder C₁-C₄-Alkanoylamino stehen und
- R²: zusätzlich auch für SO₂NH-R⁶ stehen kann, wobei R⁶ für gegebenenfalls substituiertes C₆-C₁₀-Aryl oder C₁-C₄-Alkyl steht und als mögliche Substituenten C₁-C₄-Alkyl, Hydroxy, Halogen, C₁-C₄-Alkoxy oder C₆-C₁₀-Aryloxy in Frage kommen.

### Bevorzugt sind in Formel (III) R¹¹ und R¹² gleich.

Ebenfalls bevorzugt sind in Formel (III) R¹¹ und R¹² nicht gleich. Besonders bevorzugt steht dann R¹¹ für einen gegebenenfalls substituierten C₁-C₁₂-Alkyl-Rest und R¹² für einen Rest der Formel (IV). Ebenfalls besonders bevorzugt steht dann R¹¹ für einen Rest der Formel (IV) und R¹² für einen Rest der Formel (IV), wobei die beiden Reste der Formel (IV) nicht gleich sind, d. h. sich in wenigstens einem Substituenten R¹ bis R⁵ unterscheiden.

Vorzugsweise stehen R¹¹ und R¹² in Formel (II) und (III) für einen Rest der Formel (IV).

### Bevorzugt stehen in Formel (II) und (III)

R¹, R³ und R⁵ unabhängig voneinander für Wasserstoff oder C₁- bis C₄-Alkyl und

R² und R⁴ für Wasserstoff.

Besonders bevorzugt steht in Formel (II) und (III) mindestens einer der Reste R¹, R³ und R⁵ für Methyl oder Ethyl.

Ebenfalls besonders bevorzugt stehen in Formel (II) und (III) R¹ und R⁵ für unabhängig voneinander für Methyl oder Ethyl.

Ganz besonders bevorzugt stehen in Formel (II) und (III) R¹¹ und R¹² für Phenyl, o-Tolyl, p-Tolyl, p-tert.-Butylphenyl, 2,6-Dimethylphenyl, 2,4-Dimethylphenyl, 3,5-Dimethylphenyl, 2-Ethyl-6-methylphenyl, 2,6-Diethyl-4-methylphenyl, 2,4,6-Trimethylphenyl, p-Acetaminophenyl.

Das erfindungsgemäße Verfahren ist besonders vorteilhaft zur Herstellung von N,N'-disubstituierten 1,4-Diaminoanthrachinonen der Formel (III), insbesondere solchen, bei denen R¹ und/oder R⁵ nicht für Wasserstoff stehen.

Das erfindungsgemäße Verfahren kann auch angewendet werden, um N-substituierte 1-Amino-4-hydroxy-anthrachinone der Formel (II) in N,N'-disubstituierte 1,4-Diaminoanthrachinone der Formel (III) zu überführen. In einem solchen Fall sind dann in Formel (III) R¹¹ und R¹² vorzugsweise verschieden. Die Farbstoffe der Formel (II) werden dann vorzugsweise mit einem Amin der Formel R¹²-NH₂ in Gegenwart eines Borsäureesters umgesetzt.

Als Amine im erfindungsgemäßen Verfahren kommen insbesondere aliphatische, cycloaliphatische und aromatische Amine, die gegebenenfalls substituiert sind, zum Einsatz. Die aliphatischen Amine können beispielsweise gesättigt, ungesättigt, verzweigt oder geradkettig sein.

Bevorzugte aliphatische Amine sind C₁-C₁₂-Alkylamine, die durch C₁-C₁₈-Alkoxy, Halogen oder Cyano substituiert sein können.

Besonders bevorzugte aliphatische Amine sind beispielsweise solche der nachstehenden Formeln: 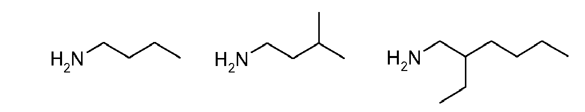 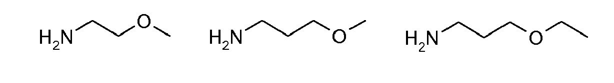 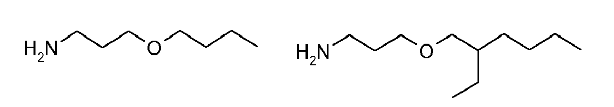 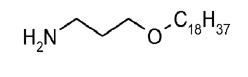 Cycloaliphatische Amine sind beispielsweise Cyclopentylamin und Cyclohexylamin.

Aromatische Amine sind insbesondere primäre aromatische Amine, ganz besonders solche der folgenden Formel (I): 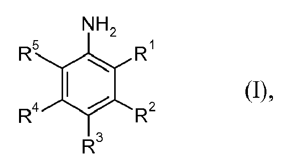 worin
- R¹ bis R⁵: unabhängig voneinander für Wasserstoff, C₁-C₁₂-Alkyl, Halogen, C₁-C₄-Alkoxy, C₆-C₁₀-Aryloxy oder C₁-C₄-Alkanoylamino stehen und
- R²: zusätzlich auch für SO₂NH-R⁶ stehen kann, wobei R⁶ für gegebenenfalls substituiertes C₆-C₁₀-Aryl oder C₁-C₄-Alkyl steht und als mögliche Substituenten C₁-C₄-Alkyl, Hydroxy, Halogen, C₁-C₄-Alkoxy oder C₆-C₁₀-Aryloxy in Frage kommen.

### Bevorzugt stehen

R¹, R³ und R⁵ unabhängig voneinander für Wasserstoff oder C₁-C₄-Alkyl und

R² und R⁴ für Wasserstoff.

Besonders bevorzugt steht mindestens einer der Reste R¹, R³ und R⁵ für Methyl oder Ethyl. Ebenfalls besonders bevorzugt stehen R¹ und R⁵ für unabhängig voneinander für Methyl oder Ethyl.

Ganz besonders bevorzugte aromatische Amine sind Anilin, o-Toluidin, p- Toluidin, p-tert.-Butylanilin, 2,6-Dimethylanilin, 2,4-Dimethylanilin, 3,5-Dimethylanilin, 2-Ethyl-6-methylanilin, 2,6-Diethyl-4-methylanilin, 2,4,6-Trimethylanilin, p-Acetanilid.

Das im erfindungsgemäßen Verfahren eingesetzte 1,4-Dihydroxyanthrachinon (Chinizarin) wird im Gemisch mit seiner Leukoform, dem 2,3-Dihydro-1,4-dihydroxyanthrachinon (Leukochinizarin) eingesetzt, wobei die Leukoverbindung vorzugsweise in einer Menge von 1 bis 90 Gew.-%, vorzugsweise 1 bis 50 Gew.-%, besonders bevorzugt 1 bis 30 Gew.-%, ganz besonders bevorzugt 2 bis 20 Gew.-%, herausragend bevorzugt 3 bis 10 Gew.-%, bezogen auf die Summe von Chinizarin und Leukochinizarin, eingesetzt wird. Auch bei der Herstellung von N,N'-disubstituierten 1,4-Diaminoanthrachinonen der Formel (III), worin mindestens einer der Reste R¹ und R⁵ nicht für Wasserstoff steht, kann vorteilhaft mit einer Menge an Leukochinizarin ≤ 30 Gew.-%, bevorzugt < 20 Gew.-%, bezogen auf die Summe von Chinizarin und Leukochinizarin, gearbeitet werden.

Das Gemisch aus Chinizarin und Leukochinizarin kann beispielsweise aus Chinizarin durch Zugabe von Reduktionsmitteln wie Zinkstaub oder Natriumdithionit in situ gebildet werden.

Chinizarin und Leukochinizarin können aber auch separat hergestellt und im erfindungsgemäßen Verfahren gemischt eingesetzt werden. Weiterhin gibt es eine besonders vorteilhafte Verfahrensvariante, bei der das Leukochinizarin erst zur Reaktionsmischung, insbesondere zur heißen, ganz besonders zur mindestens 50 °C heißen Reaktionsmischung zugesetzt wird, vorteilhaft als Lösung im verwendeten Lösungsmittel oder Lösungsmittelgemisch.

Das Verhältnis von Amin zur Anthrachinonverbindung, d. h. der Gesamtmenge von Chinizarin und Leukochinizarin, richtet sich vorzugsweise danach, ob N-substituierte 1-Amino-4-hydroxy-anthrachinone oder N,N'-disubstituierte 1,4-Diaminoanthrachinone hergestellt werden sollen. Es beträgt bei der Herstellung von N-substituierten 1 -Amino-4-hydroxy-anthrachinonen 1,0 bis 1,5 Moläquivante, bevorzugt 1,02 bis 1,4, besonders bevorzugt 1,04 bis 1,3 Moläquivalente, bei der Herstellung von N,N'-disubstituierten 1,4-Diaminoanthrachinonen 2,0 bis 4,0 Moläquivante, bevorzugt 2,1 bis 3,0, besonders bevorzugt 2,2 bis 2,5 Moläquivalente. Wenn bei letzteren das Amin auch als Lösungsmittel verwendet wird, beträgt das Verhältnis beispielsweise 2,5 bis 10,0 Moläquivante, bevorzugt 4,0 bis 8,0, besonders bevorzugt 5,0 bis 7,0 Moläquivalente.

Geeignete Borsäureester sind solche von C₁-C₆-Alkanolen und C₃-C₆-Cycloalkanolen sowie von Benzylalkohol. Bevorzugt sind solche, deren korrespondierender Alkohol einen Siedepunkt bei Normaldruck unterhalb von 120 °C, besonders bevorzugt unterhalb von 100 °C, ganz besonders bevorzugt unterhalb von 80 °C liegt.

Bevorzugte Borsäureester sind solche von gegebenenfalls verzweigten C₁-C₄-Alkanolen. Beispiele hierfür sind Borsäuretrimethylester, Borsäuretriethylester, Borsäuretri-n-propylester, Borsäuretri-i-propylester, Borsäuretri-n-butylylester, Borsäuretri-s-butylester, Borsäuretri-i-butylester.

Der Borsäuretriethylester ist besonders bevorzugt. Der Borsäuretrimethylester ist ganz besonders bevorzugt.

Das Verhältnis von Borsäureester zur Anthrachinonverbindung, d. h. der Gesamtmenge von Chinizarin und Leukochinizarin, beträgt vorzugsweise 0,01 bis 2,0 Moläquivalente, bevorzugt 0,03 bis 1,5, besonders bevorzugt 0,05 bis 1,3 Moläquivalente. Bei der Herstellung von N-substituierten 1-Amino-4-hydroxy-anthrachinonen der Formel (II) kommt man in der Regel mit einem Verhältnis von Borsäureester zur Anthrachinonverbindung von ≤ 0,2, vorzugsweise von ≤ 0,1 Moläquivalente aus. Bei der Herstellung von N,N'-disubstituierten 1,4-Diaminoanthrachinonen der Formel (III) empfiehlt sich in der Regel ein Verhältnis von Borsäureester zur Anthrachinonverbindung von 0,3 bis 1,0, vorteilhaft von 0,5 bis 0,8 Moläquivalenten.

Der Borsäureester kann vor, gleichzeitig oder nach dem Amin der Reaktionsmischung zugesetzt werden. Wird er vor dem Amin zugesetzt, so kann vorteilhaft zunächst die Umsetzung des Borsäureesters mit dem Chinizarin und/oder Leukochinizarin und gegebenenfalls mit der Hydroxycarbonsäure erfolgen. Diese Umsetzung kann bei einer Temperatur von 40 bis 140 °C, vorzugsweise 60 bis 120 °C, besonders bevorzugt 70 bis 100 °C erfolgen. Vorteilhaft wird hierbei der aus dem Borsäureester freiwerdende Alkohol abdestilliert.

Das Verfahren kann in Gegenwart einer Hydroxycarbonsäure durchgeführt werden. Es kann aber auch ohne diesen Zusatz durchgeführt werden. Vorteilhaft wird das Verfahren in Gegenwart einer Hydroxycarbonsäure durchgeführt. Geeignete Hydroxycarbonsäuren sind vorzugsweise aliphatisch oder aromatisch. In einer besonderen Ausführungsform tragen die aliphatischen Hydroxycarbonsäuren die Hydroxygruppe und die Carbonsäuregruppe am gleichen C-Atom. In einer weiteren besonderen Ausführungsform tragen die aromatischen Hydroxycarbonsäuren die Hydroxygruppe und die Carbonsäuregruppe an zwei unmittelbar benachbarten aromatischen C-Atomen.

Als aliphatische Hydroxycarbonsäuren sind besonders die mit 2 bis 7 C-Atomen bevorzugt. Beispiele hierfür sind Hydroxyessigsäure, Milchsäure, Äpfelsäure, Weinsäure, Zitronensäure, 2,2-Bis-(hydroxymethyl)-propionsäure und Galactonsäure. Besonders bevorzugt sind Hydroxyessigsäure und Milchsäure.

Als aromatische Hydroxycarbonsäuren sind besonders o-Hydroxycarbonsäuren des Benzols und Naphthalins von Bedeutung. Bevorzugt sind Salicylsäure und ihre Derivate, besonders durch Methyl, Fluor, Chlor, Brom, Hydroxy, Cyano, COOH odere Nitro substituierte Derivate. Beispiele sind Salicylsäure, 2,5-Dihydroxy-1,4-benzoldicarbonsäure, 2-Naphthol-3-carbonsäure.

Das Verhältnis von Hydroxycarbonsäure zur Anthrachinonverbindung, d. h. der Gesamtmenge von Chinizarin und Leukochinizarin, beträgt vorzugsweise 0 bis 2,0 Moläquivalenten, bevorzugt 0 bis 1,0, besonders bevorzugt von 0,1 bis 0,8, ganz besonders bevorzugt 0,2 bis 0,6 Moläquivalenten. Das erfindungsgemäße Verfahren kann auch in Gegenwart von mehr als einer Hydroxycarbonsäure durchgeführt werden. Die Mengenangaben beziehen sich dann auf die gesamte Mischung dieser Hydroxycarbonsäuren.

Das Verfahren wird gegebenenfalls in einem Lösungsmittel durchgeführt. Als Lösungsmittel kann das eingesetzte Amin, insbesondere das Amin der Formel (I) selbst dienen. Es können jedoch auch andere Lösungsmittel verwendet werden. Geeignete andere Lösungsmittel sind beispielsweise aliphatische Alkohole wie n-Butanol, 2-Methyl-1-propanol, 2-Butanol, i-Amylalkohol, gegebenenfalls substituierte Aromaten wie Dichlorbenzol, Trichlorbenzol, Toluol und Xylol sowie mit Wasser mischbare polare Lösungsmittel. Solche mit Wasser mischbare polare Lösungsmittel sind beispielsweise Butyrolacton, N-Methylpyrrolidon, Caprolactam. Es können auch Mischungen solcher Lösungsmittel eingesetzt werden. Bevorzugt ist hier beispielsweise eine Mischung aus einem mit Wasser mischbaren polaren Lösungsmittel und einem zweiten, das in Wasser nur eine eingeschränkte Löslichkeit besitzt und vorteilhaft mit Wasser ein Azeotrop bildet, beispielsweise eine Mischung aus N-Methylpyrrolidon und n-Butanol. Es können aber auch Mischungen mit Wasser eingesetzt werden, beispielsweise n-Butanol und Wasser. Die Menge des Lösungsmittels wird vorteilhaft so gering wie möglich gewählt, so dass insbesondere auch nach beendeter Umsetzung noch eine ausreichende Rührung möglich ist.

Das Verfahren wird vorzugsweise bei einer Temperatur von 60 bis 200 °C, vorteilhaft von 80 bis 160 °C, besonders vorteilhaft von 90 bis 150 °C durchgeführt. Hierbei kann der im Borsäureester enthaltene Alkohol abdestilliert werden. Zusammen mit diesem Alkohol oder aber auch anschließend kann das Reaktionswasser abdestilliert werden. Es kann aber auch vorteilhaft sein, insbesondere bei der Herstellung von N-substituierten 1-Amino-4-hydroxyanthrachinonen, das Reaktionswasser und eventuell auch den Alkohol nicht abzudestillieren. Die Bildung der in diesem Fall ungewünschten N,N'-disubstituierten 1,4-Diaminoanthrachinone kann so reduziert werden. Beispielsweise kann man die Reaktion so führen, dass am Ende der Reaktion 1 bis 20 Gew.-%, vorzugsweise 1 bis 10 Gew.-%, besonders bevorzugt 2 bis 3 Gew.-% Wasser in der Reaktionsmischung enthalten sind.

Die Reaktionsmischung wird nach beendeter Reaktion vorzugsweise abgekühlt. Zur Oxidation von gegebenenfalls vorhandenen Leukoverbindungen kann Luft durch das Reaktionsmedium geleitet werden. Zur Verbesserung dieser Oxidation kann es auch vorteilhaft sein, durch AlkaliZusatz, beispielsweise Natrium- oder Kaliumhydroxid, Borsäure- und/oder Hyroxycarbonsäureester der gebildeten Farbstoffe oder ihrer Leukoformen zu spalten und gegebenenfalls zu oxidieren. Die Oxidation kann aber auch mit anderen Oxidationsmitteln außer Sauerstoff durchgeführt werden. Die Ausfällung der substituierten Aminoanthrachinone kann beispielsweise durch Zugabe eines Alkohols, beispielsweise Methanol, Ethanol, Propanol, Butanol oder von Wasser oder von Alkoholgemischen oder von Gemischen aus Alkoholen und Wasser verbessert werden. Diese Zugabe eines Alkohols kann bei Raumtemperatur bis 160 °C, vorzugsweise 50 °C bis 140 °C erfolgen, wobei bei Temperaturen oberhalb des Siedepunkts des Alkohols vorteilhaft unter Druck gearbeitet wird. Die substituierten Aminoanthrachinone werden abfiltriert, mit den genannten Alkoholen oder einer Mischung aus dem in der Reaktion verwendeten Lösungsmittel und den genannten Alkoholen gewaschen. In der Regel schließt sich noch eine Wasserwäsche an. Schließlich werden die Farbstoffe getrocknet.

Das erfindungsgemäße Verfahren zeichnet sich durch exzellente Raum-Zeit-Ausbeute aus, insbesondere durch Einsparung an Reaktionszeit. Die Qualität der Farbstoffe ist der nach bisherigen Verfahren erhältlichen mindestens ebenbürtig. Das erfindungsgemäße Verfahren führt zudem zu kürzeren Reaktionszeiten und der Bildung von weniger Nebenprodukten. Die Anwendung des erfindungsgemäßen Verfahrens führt ausserdem zu einer geringeren Schaumneigung. Diese reduzierte Schaumneigung ist insbesondere dann besonders wertvoll, wenn das Amin auch als Lösungsmittel verwendet wird.

Die nach dem erfindungsgemäßen Verfahren hergestellten Farbstoffe eignen sich besonders zum Massefärben von Kunststoffen, gegebenenfalls auch in Mischung mit anderen Farbstoffen.

Die nach dem erfindungsgemäßen Verfahren hergestellten Farbstoffe eignen sich ebenfalls besonders zum Färben von Synthesefasern, gegebenenfalls auch in Mischung mit anderen Farbstoffen. Hierzu werden sie vorteilhaft in dispergierter Form verwendet.

Die Farbstoffe werden vorzugsweise in Mengen von 0,0001 bis 1 Gew.-%, insbesondere 0,01 bis 0,5 Gew.-% bezogen auf den Kunststoff oder die Synthesefasern eingesetzt.

### Beispiele

### Beispiel 1

20,0 g Chinizarin, 23,0 g Dihydrochinizarin (enthält 1,5 g Chinizarin), 11,35 g Borsäuretrimethylester wurden in 153 g 2,4,6-Trimethylanilin unter Stickstoffatmosphäre eingetragen. Nach Erwärmen auf 50 °C wurden 7,84 g 90-gew.-proz. Milchsäure zugesetzt. Während nur 1 h konnte ohne Schaumbildung auf 145 °C geheizt werden, wobei das dabei entstehende Methanol und Wasser abdestilliert wurde. 3,5 h wurde bei dieser Temperatur gerührt und über Dünnschichtchromatogramm auf vollständige Umsetzung geprüft. Dann wurde auf 100 °C abgekühlt und während 3 h Luft eingeleitet. Nach Abkühlen auf 70 °C wurden 17,35 g Kaliumhydroxidpulver eingetragen und nach Erwärmen auf 100 °C erneut 3 h Luft eingeleitet. Es wurde auf 80 °C abgekühlt. 220 ml Methanol wurden zugetropft. Schließlich wurde die Suspension bei 60 °C abgesaugt, mit 220 ml heißem Methanol (von 60 °C) und anschließend mit 1 1 heißem Wasser (von 80 °C) in Portionen gewaschen. Bei 50 °C wurde im Vakuum getrocknet. Man erhielt 70,8 g (83,5 % d. Th.) eines blauen Kristallpulvers der Formel

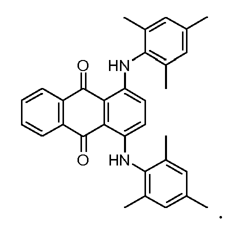

### Aufheizzeit: 1 h

### Kondensationszeit: 3,5 h

### Beispiel 2

30,7 g Chinizarin, 12,3 g Dihydrochinizarin (enthält 0,8 g Chinizarin), 11,35 g Borsäuretrimethylester wurden in 125 g 2,4,6-Trimethylanilin unter Stickstoffatmosphäre eingetragen. Nach Erwärmen auf 50 °C wurden 7,84 g 90-gew.-proz. Milchsäure zugesetzt. Während nur 1 h wurde auf 145 °C ohne Schaumbildung geheizt und das dabei entstehende Methanol und Wasser abdestilliert. 3,5 h wurde bei dieser Temperatur gerührt und über Dünnschichtchromatogramm auf vollständige Umsetzung geprüft. Dann wurde auf 100 °C abgekühlt und während 3 h Luft eingeleitet. Nach Abkühlen auf 70 °C wurden 17,35 g Kaliumhydroxidpulver eingetragen und nach Erwärmen auf 100 °C erneut 3 h Luft eingeleitet. Es wurde auf 80 °C abgekühlt. 160 ml Methanol wurden zugetropft. Schließlich wurde die Suspension bei 60 °C abgesaugt, mit 220 ml heißem Methanol (von 60 °C) und anschließend mit 1 1 heißem Wasser (von 80 °C) in Portionen gewaschen. Bei 50 °C wurde im Vakuum getrocknet. Man erhielt 70,4 g (83,0 % d. Th.) eines blauen Kristallpulvers der Formel aus Beispiel 1.

### Aufheizzeit: 1 h

### Kondensationszeit: 3,5 h

### Beispiel 2a

Es wurden statt Borsäuretrimethylester 15,9 g Borsäuretriethylester eingesetzt. Aufheizzeit, Kondensationszeit und Ausbeute waren unverändert.

### Beispiel 3

Es wurde wie in Beispiel 2 gearbeitet, jedoch wurden 8,51 g Borsäuretrimethylester und 5,88 g 90-gew.-proz. Milchsäure eingesetzt. Man erhielt 70,5 g (83,1 % d. Th.) eines blauen Kristallpulvers der Formel aus Beispiel 1. Die Aufheizphase dauerte genauso lang.

### Aufheizzeit: 1 h

### Kondensationszeit: 3,5 h

### Beispiel 3a

Es wurden statt Milchsäure 5,52 g Hydroxyessigsäure verwendet. Aufheizzeit, Kondensationszeit und Ausbeute waren unverändert.

### Beispiel 3b

Es wurden statt Milchsäure 10,0 g Salicylsäure verwendet. Aufheizzeit, Kondensationszeit und Ausbeute waren unverändert.

### Beispiel 4 (Vergleichsbeispiel, analog Beispiel 4 aus EP751116, aber mit Milchsäure anstatt von Hydroxyessigsäure)

20,0 g Chinizarin, 23,0 g Dihydrochinizarin (enthält 1,5 g Chinizarin), 5,84 g Borsäure wurden in 153 g 2,4,6-Trimethylanilin unter Stickstoffatmosphäre eingetragen. Nach Erwärmen auf 50 °C wurden 7,84 g 90-gew.-proz. Milchsäure zugesetzt. Während 1 h wurde auf 115 °C geheizt und diese Temperatur 4 h gehalten. Wird diese Zeit nicht eingehalten, erfolgte beim weiteren Aufheizen starke Schaumbildung, die zum Überschäumen in die Destillationsvorlage führen kann. Anschließend wurde während 2 h auf 145 °C geheizt und 6 h bei dieser Temperatur gerührt, wobei entstehendes Wasser abdestilliert wurde. Über Dünnschichtchromatogramm wurde auf vollständige Umsetzung geprüft. Dann wurde auf 100 °C abgekühlt und während 3 h Luft eingeleitet. Nach Abkühlen auf 70 °C wurden 17,35 g Kaliumhydroxidpulver eingetragen und nach Erwärmen auf 100 °C erneut 3 h Luft eingeleitet. Es wurde auf 80 °C abgekühlt. 220 ml Methanol wurden zugetropft. Schließlich wurde die Suspension bei 60 °C abgesaugt, mit 220 ml heißem Methanol (von 60 °C) und ansschließend mit 1 1 heißem Wasser (von 80 °C) in Portionen gewaschen. Bei 50 °C wurde im Vakuum getrocknet. Man erhielt 71,1 g (83,9 % d. Th.) eines blauen Kristallpulvers der Formel aus Beispiel 1.

### Aufheizzeit: 7 h

### Kondensationszeit: 6 h

Bis zum Erreichen der endgültigen Reaktionstemperatur mussten unter Berücksichtigung von Schaumbildung 7 Stunden aufgebracht werden. In den Beispielen 1-3 konnte dies bereits in einer Stunde realisiert werden. Ausserdem konnte die gleiche Ausbeute wie in den Beispielen 1-3 erst nach 6 Stunden erreicht werden anstelle von 3,5 Stunden. Zusätzlich ließ sich in den Beispielen 2 und 3 die Einsatzmenge von Dihydrochinizarin und Borsäureester ohne Nachteil deutlich verringern.

### Beispiel 5

67,8 g Chinizarin, 4,27 g Dihydrochinizarin (enthält 0,28 g Chinizarin), 39,7 g p-Toluidin, 2,52 g Borsäuretrimethylester und 7,50 g 90-gew.-proz. Milchsäure wurden in 120 ml γ-Butyrolacton unter Stickstoffatmosphäre eingetragen. Es wurde innerhalb von 1 h auf 100 °C geheizt und 12 h bei dieser Temperatur gehalten, wobei der Umsetzungsgrad über Dünnschichtchromatographie kontrolliert wurde. Bereits nach 8 h war der Restgehalt an Chinizarin auf unter 10 % abgefallen. Dann wurde auf Raumtemperatur abgekühlt, abgesaugt, mit 250 ml heißem Methanol (von 60 °C) und 1 1 heißem Wasser (von 80 °C) in Portionen gewaschen. Nach dem Trocknen bei 50 °C im Vakuum erhielt man 91,46 g (92,6 % d. Th.) eines violetten Kristallpulvers der Formel

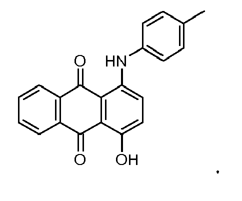

Das Produkt enthielt 5,31 % der Verbindung der Formel 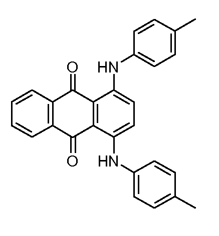 sowie 0,93 % Chinizarin.

### Aufheizzeit: 1 h

### Kondensationszeit: 12 h

### Beispiel 6 (Vergleichsbeispiel)

67,8 g Chinizarin, 4,27 g Dihydrochinizarin (enthält 0,28 g Chinizarin), 39,7 g p-Toluidin, 1,00 g Borsäure und 7,50 g 90-gew.-proz. Milchsäure wurden in 100 ml γ-Butyrolacton unter Stickstoffatmosphäre eingetragen. Es wurde auf innerhalb von 1 h auf 100 °C geheizt und diese Temperatur für 8 h gehalten. Da nach Dünnschichtchromatogramm noch ca. 30 % des Chinizarins nicht umgesetzt waren, wurden 20 g p-Toluidin zugesetzt und weitere 6 h bei 100 °C gerührt: Rest Chinizarin ca. 20 %. Anschließend wurde auf 125 °C erhitzt und bei dieser Temperatur weitere 4 h gerührt. Da jetzt der Restgehalt Chinizarin auf unter 10 % abgefallen war, wurde auf Raumtemperatur abgekühlt, abgesaugt, mit 250 ml heißem Methanol (von 60 °C) und 1 1 heißem Wasser (von 80 °C) in Portionen gewaschen. Nach dem Trocknen bei 50 °C im Vakuum erhielt man 90,11 g (91,2 % d. Th.) eines violetten Kristallpulvers der Formel des Beispiels 5.

Das Produkt enthielt 6,98 % der Verbindung der Formel 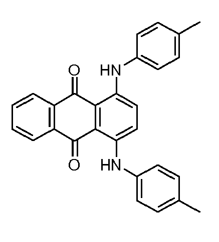 sowie 1,22 % Chinizarin.

### Aufheizzeit: 1 h

### Kondensationszeit: 18 h

### Beispiel 7

22,3 g Chinizarin, 23,6 g Dihydrochinizarin (enthält 0,54 g Chinizarin), 12,8 g Borsäuretrimethylester und 6,05 g 90-gew.-proz. Milchsäure wurden in 172,4 g 2-Methyl-6-ethylanilin unter Stickstoffatmosphäre eingetragen. Während 1 h wurde auf 115 °C geheizt und dabei das entstehende Methanol abdestilliert. Ohne Verweilen wurde dann während 1 h auf 145 °C geheizt, so dass die schaumfreie Aufheizphase 2 Std. dauerte, und 8 h bei dieser Temperatur gerührt, wobei entstehendes Wasser abdestilliert wurde. Über Dünnschichtchromatogramm wurde auf vollständige Umsetzung geprüft. Dann wurde auf 125 °C abgekühlt und während 3 h Luft eingeleitet. Nach Abkühlen auf 70 °C wurden 24,4 g Kaliumhydroxidpulver eingetragen und bei 70 °C erneut 3 h Luft eingeleitet. 360 ml Methanol wurden während 2 h bei 70 °C zugetropft und 1 h unter leichtem Kochen gerührt. Schließlich wurde die Suspension auf Raumtemperatur abgekühlt, abgesaugt, mit 250 ml kaltem Methanol und anschließend mit 1 1 heißem Wasser (von 80 °C) in Portionen gewaschen. Bei 80 °C wurde im Vakuum getrocknet. Man erhielt 67,0 g (74,7 % d. Th.) eines blauen Kristallpulvers der Formel

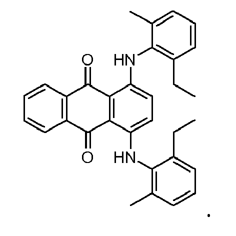

### Aufheizzeit: 2 h

### Kondensationszeit: 8 h

### Beispiel 8

Es wurde gearbeitet wie in Beispiel 7, jedoch wurden 33,1 g Chinizarin, 12,8 g Dihydrochinizarin (enthält 0,27 g Chinizarin) eingesetzt. Man erhielt 67,2 g (74,0 % d. Th.) eines blauen Kristallpulvers der Formel aus Beispiel 7.

### Aufheizzeit: 2 h

### Kondensationszeit: 8 h

### Beispiel 9 (Vergleichsbeispiel)

22,3 g Chinizarin, 23,6 g Dihydrochinizarin (enthält 0,54 g Chinizarin), 7,6 g Borsäure und 6,05 g 90-gew.-proz. Milchsäure wurden in 172,4 g 2-Methyl-6-ethylanilin unter Stickstoffatmosphäre eingetragen. Während 1 h wurde auf 115 °C geheizt. 3,5 h wurde bei dieser Temperatur gerührt. Dann wurde während 2,5 h auf 145 °C geheizt, womit die Aufheizphase 7 Stunden dauerte und sich während dieser Zeit ständig Schaum bildete, der aber beherrschbar blieb. Dann wurde 6 h bei 145 °C gerührt, wobei entstehendes Wasser abdestilliert wurde. Über Dünnschichtchromatogramm wurde auf vollständige Umsetzung geprüft. Dann wurde auf 125 °C abgekühlt und während 3 h Luft eingeleitet. Nach Abkühlen auf 70 °C wurden 24,4 g Kaliumhydroxidpulver eingetragen und bei 70 °C erneut 3 h Luft eingeleitet. 360 ml Methanol wurden während 2 h bei 70 °C zugetropft und 1 h unter leichtem Kochen gerührt. Schließlich wurde die Suspension auf Raumtemperatur abgekühlt, abgesaugt, mit 250 ml kaltem Methanol und anschließend mit 1 1 heißem Wasser (von 80 °C) in Portionen gewaschen. Bei 80 °C wurde im Vakuum getrocknet. Man erhielt 68,4 g (76,3 % d. Th.) eines blauen Kristallpulvers der Formel aus Beispiel 7.

### Aufheizzeit: 7 h

### Kondensationszeit: 6 h

### Beispiel 10 (Vergleichsbeispiel, entsprechend Beispiel 6 aus EP 751116)

40,5 g Chinizarin, 40,5 g Dihydrochinizarin, 12,8 g Borsäure und 14,4 g 90-gew.-proz. Milchsäure wurden in 280 g 2-Methyl-6-ethylanilin unter Stickstoffatmosphäre eingetragen. Zur Vermeidung von Schaumbildung wurde unter Rühren folgendermaßen aufgeheizt: während 1 h auf 115 °C, 3,5 h wurde bei dieser Temperatur gehalten, während 2,5 h auf 145 °C geheizt. Dann wurde 12 h bei dieser Temperatur gerührt, wobei entstehendes Wasser abdestilliert wurde. Über Dünnschichtchromatogramm wurde auf vollständige Umsetzung geprüft. Dann wurde auf 90 °C abgekühlt, 50 g KOH zugegeben und 3 h Luft eingeleitet. Danach kühlte man auf 70 °C ab und fügte 450 ml Methanol zu. Nch Abkühlen auf Raumtemperatur wurde der blaue Farbstoff abfiltriert, mit 300 ml Methanol und danach mit 1 1 Wasser gewaschen und schließlich im Vakuum bei 80 °C getrocknet. Man erhielt 125,2 g (81,7 % d. Th.) des Farbstoffs der der Formel aus Beispiel 7.

### Aufheizzeit: 7 h

### Kondensationszeit: 12 h

### Beispiel 11

20,35 g Chinizarin, 20,38 g Dihydrochinizarin (enthält 0,47 g Chinizarin), 10,8 g Borsäuretrimethylester und 8,71 g 90-gew.-proz. Milchsäure wurden in 159,7 g 2,6-Diethyl-4-methylanilin unter Stickstoffatmosphäre eingetragen. Während 1 h wurde auf 115 °C geheizt und dabei das entstehende Methanol abdestilliert. Ohne Verweilen wurde während nur 2,5 h auf 145 °C geheizt und 8 h bei dieser Temperatur gerührt, wobei entstehendes Wasser abdestilliert wurde. Über Dünnschichtchromatogramm wurde auf vollständige Umsetzung geprüft. Dann wurde auf 125 °C abgekühlt und während 3 h Luft eingeleitet. Nach Abkühlen auf 80 °C wurden 20,6 g Kaliumhydroxidpulver eingetragen und bei 80 °C erneut 4 h Luft eingeleitet. 290 ml Methanol wurden während 2 h bei 70 °C zugetropft und 1 h unter leichtem Kochen gerührt. Schließlich wurde die Suspension auf Raumtemperatur abgekühlt, abgesaugt, mit 200 ml kaltem Methanol und anschließend mit 1 1 heißem Wasser (von 80 °C) in Portionen gewaschen. Bei 80 °C wurde im Vakuum getrocknet. Man erhielt 72,9 g (82,0 % d. Th.) eines blauen Kristallpulvers der Formel

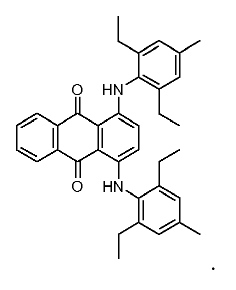

### Aufheizzeit: 3,5 h

### Kondensationszeit: 8 h

### Beispiel 12

22,3 g Chinizarin, 23,9 g Dihydrochinizarin (enthält 0,98 g Chinizarin), 28,8 g Borsäuretributylester und 6,44 g 85-gew.-proz. Milchsäure wurden in 172,4 g 2-Methyl-6-ethylanilin unter Stickstoffatmosphäre eingetragen. Während 1 h wurde auf 115 °C geheizt und direkt anschließend während 1 h auf 145 °C geheizt, so dass die schaumfreie Aufheizphase 2 Std dauerte. Hierbei destillierte das entstehende Butanol ab. 8 h wurde bei dieser Temperatur gerührt, wobei entstehendes Wasser abdestilliert wurde. Über Dünnschichtchromatogramm wurde auf vollständige Umsetzung geprüft. Dann wurde auf 125 °C abgekühlt und während 3 h Luft eingeleitet. Nach Abkühlen auf 70 °C wurden 24,4 g Kaliumhydroxidpulver eingetragen und bei 70 °C erneut 3 h Luft eingeleitet. 360 ml Methanol wurden während 2 h bei 70 °C zugetropft und 1 h unter leichtem Kochen gerührt. Schließlich wurde die Suspension auf Raumtemperatur abgekühlt, abgesaugt, mit 250 ml kaltem Methanol und anschließend mit 1 1 heißem Wasser (von 80 °C) in Portionen gewaschen. Bei 80 °C wurde im Vakuum getrocknet. Man erhielt 67,5 g (75,3 % d. Th.) eines blauen Kristallpulvers der Formel aus Beispiel 7.

Aufheizzeit: 2 h

Kondensationszeit: 8 h

## Patentansprüche

1. Verfahren zur Herstellung von substituierten Aminoanthrachinonen durch Umsetzung von 1,4-Dihydroxyanthrachinon mit Aminen in Gegenwart von Dihydro-1,4-dihydroxyanthrachinon und Borsäureester.

2. Verfahren gemäß Anspruch 1, **dadurch gekennzeichnet, dass** es sich bei den Aminen um aliphatische, cycloaliphatische oder aromatische Amine handelt, die gegebenenfalls substituiert sind.

3. Verfahren gemäß Anspruch 1 oder 2, **dadurch gekennzeichnet, dass** sich der Borsäureester von C₁-C₆-Alkanolen und C₃-C₆-Cycloalkanolen sowie von Benzylalkohol ableitet.

4. Verfahren gemäß Anspruch 3, **dadurch gekennzeichnet, dass** der zum Borsäureester korrespondierende Alkohol einen Siedepunkt bei Normaldruck unterhalb von 120 °C besitzt.

5. Verfahren gemäß Anspruch 3 oder 4, **dadurch gekennzeichnet, dass** es sich bei dem Borsäureester um Borsäuretrimethylester, Borsäuretriethylester, Borsäuretri-n-propylester, Borsäuretri-i-propylester, Borsäuretri-n-butylylester, Borsäuretri-s-butylester, Borsäuretri-i-butylester handelt.

6. Verfahren gemäß Anspruch 1 oder 2, **dadurch gekennzeichnet**, als Amin ausgewählt ist aus der Gruppe der aliphatischen Amine der nachstehenden Formeln 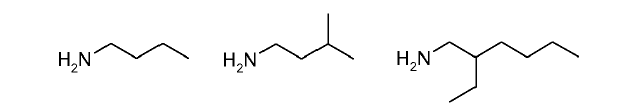 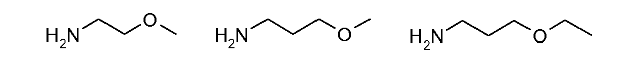 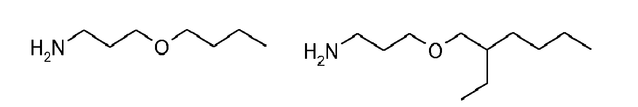 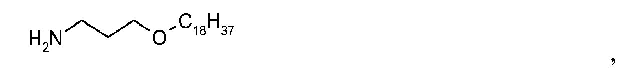 der cycloaliphatische Amine Cyclopentylamin und Cyclohexylamin und
der aromatischen Amine aus der Gruppe der primären aromatischen Amine der folgenden Formel (I) 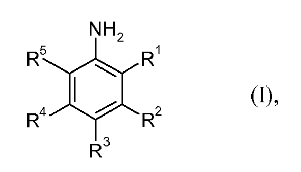 worin
R¹ bis R⁵ unabhängig voneinander für Wasserstoff, C₁-C₁₂-Alkyl, Halogen, C₁-C₄-Alkoxy, C₆-C₁₀-Aryloxy oder C₁-C₄-Alkanoylamino stehen und
R² zusätzlich auch für SO₂NH-R⁶ stehen kann, wobei R⁶ für gegebenenfalls substituiertes C₆-C₁₀-Aryl oder C₁-C₄-Alkyl steht und als möglich Substituenten C₁-C₄-Alkyl, Hydroxy, Halogen, C₁-C₄-Alkoxy oder C₆-C₁₀-Aryloxy
sind.

7. Verfahren gemäß Anspruch 6, **dadurch gekennzeichnet, dass** aromatische Amine der folgenden Formel (I) entsprechen,
worin
R¹, R³ und R⁵ unabhängig voneinander für Wasserstoff oder C₁-C₄-Alkyl stehen und
R² und R⁴ für Wasserstoff stehen.

8. Verfahren gemäß Anspruch 1, **dadurch gekennzeichnet, dass** es sich bei den substituierten Aminoanthrachinonen um solche der Formel (II) 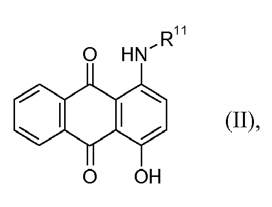 worin
R¹¹ für C₁-C₁₂-Alkyl, das durch C₁-C₁₈-Alkoxy, Halogen oder Cyano substituiert sein kann, Cyclopentyl, Cyclohexyl oder einen Rest der Formel (IV) 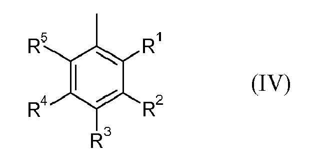
steht,
worin
R¹ bis R⁵ unabhängig voneinander für Wasserstoff, C₁-C₁₂-Alkyl, Halogen, C₁-C₄-Alkoxy, C₆-C₁₀-Aryloxy oder C₁-C₄-Alkanoylamino stehen und
R² zusätzlich auch für SO₂NH-R⁶ stehen kann, wobei R⁶ für gegebenenfalls substituiertes C₆-C₁₀-Aryl oder C₁-C₄-Alkyl steht und als möglich Substituenten C₁-C₄-Alkyl, Hydroxy, Halogen, C₁-C₄-Alkoxy oder C₆-C₁₀-Aryloxy in Frage kommen
oder solche der Formel (III) 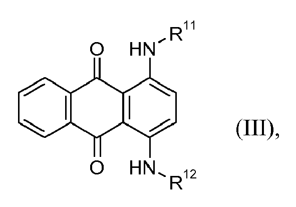 worin
R¹¹ und R¹² unabhängig voneinander für C₁-C₁₂-Alkyl, das durch C₁-C₁₈-Alkoxy, Halogen oder Cyano substituiert sein kann, Cyclopentyl, Cyclohexyl oder einen Rest der Formel (IV) 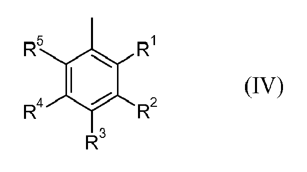 stehen,
worin
R¹ bis R⁵ unabhängig voneinander für Wasserstoff, C₁-C₁₂-Alkyl, Halogen, C₁-C₄-Alkoxy, C₆-C₁₀-Aryloxy oder C₁-C₄-Alkanoylamino stehen und
R² zusätzlich auch für SO₂NH-R⁶ stehen kann, wobei R⁶ für gegebenenfalls substituiertes C₆-C₁₀-Aryl oder C₁-C₄-Alkyl steht und als möglich Substituenten C₁-C₄-Alkyl, Hydroxy, Halogen, C₁-C₄-Alkoxy oder C₆-C₁₀-Aryloxy in Frage kommen,
handelt.

9. Verfahren gemäß Anspruch 9 **dadurch gekennzeichnet, dass** in Formel (II) und (III)
R¹¹ und R¹² für Phenyl, o-Tolyl, p- Tolyl, p-tert.-Butylphenyl, 2,6-Dimethylphenyl, 2,4-Dimethylphenyl, 3,5-Dimethylphenyl, 2-Ethyl-6-methylphenyl, 2,6-Diethyl-4-methylphenyl, 2,4,6-Trimethylphenyl, p-Acetaminophenyl stehen.

10. Verfahren gemäß Anspruch 1, **dadurch gekennzeichnet, dass** das Verhältnis von Borsäureester zur Anthrachinonverbindung, d. h. der Gesamtmenge von Chinizarin und Leukochinizarin, im Bereich 0,01 bis 2,0 Moläquivalente, bevorzugt im Bereich 0,03 bis 1,5, besonders bevorzugt 0,05 bis 1,3 Moläquivalente liegt.

11. Verfahren gemäß Anspruch 1, **dadurch gekennzeichnet, dass** es in Gegenwart einer Hydroxycarbonsäure durchgeführt wird.

12. Verfahren gemäß Anspruch 12, **dadurch gekennzeichnet, dass** als Hydroxycarbonsäuren Hydroxyessigsäure, Milchsäure, Äpfelsäure, Weinsäure, Zitronensäure, 2,2-Bis-(hydroxymethyl)-propionsäure, Galactonsäure, Salicylsäure, 2,5-Dihydroxy-1,4-benzoldicarbonsäure oder 2-Naphthol-3-carbonsäure verwendet werden.

13. Verfahren gemäß Anspruch 1, **dadurch gekennzeichnet, dass** die Reaktion bei einer Temperatur von 60 bis 200 °C durchgeführt wird.

14. Verwendung der nach dem Verfahren gemäß Anspruch 1 hergestellten Farbstoffe zum Massefärben von Kunststoffen oder zum Färben von Synthesefasern.
